# EUROPÄISCHE PATENTANMELDUNG

(11) **EP 1 591 594 A2**
(43) Veröffentlichungstag der Anmeldung: **02.11.2005**
(21) Anmeldenummer: 05003816.5
(22) Anmeldetag: 23.02.2005
(51) Int. Cl.: E03F 5/04

(54) **Ablaufvorrichtung**

(30) Priorität: 27.04.2004 DE 102004020625
(71) Anmelder: Dallmer GmbH & Co. KG, 59757 Arnsberg (DE)
(72) Erfinder: Dallmer, Johannes, 59757 Arnsberg (DE)
(74) Vertreter: Basfeld, Rainer

(57) **Zusammenfassung**

Ablaufvorrichtung (1) zur Boden- oder Wandmontage, umfassend mindestens eine Rohranschlussmuffe (5) zur Verbindung mit einem Ablaufrohr (6), wobei eine Überwurfmutter (7) vorgesehen ist, die auf ein Gewinde (8) der Rohranschlussmuffe (5) zur Befestigung des Ablaufrohres (6) aufgeschraubt werden kann, dadurch gekennzeichnet, dass ein Rastmittel (10) vorgesehen ist, welches dazu geeignet ist, die Überwurfmutter (7) in einer vorbestimmten Drehposition zu fixieren.

## Beschreibung

Die vorliegende Erfindung betrifft eine Ablaufvorrichtung für die Wand- oder Deckenmontage gemäß dem Oberbegriff des Anspruchs 1.

Ablaufvorrichtungen der zuvor genannten Art sind hinreichend bekannt. Sie werden vornehmlich im Bodenbereich eingesetzt, denkbar ist jedoch ebenfalls eine Anbringung im Wandbereich, beispielsweise in einem Schwimmbecken.

Insbesondere wenn die Ablaufvorrichtung im Boden angebracht wird, ist sie Schwingungen ausgesetzt, die beispielsweise durch ein Begehen des Bodens ausgelöst werden. Auch Druckstöße seitens des Ablaufrohres können zu Vibrationen führen. Durch die Vibrationen kann jedoch die Verbindung zwischen der Rohranschlussmuffe und dem Ablaufrohr gelöst werden, wodurch Leckagen und Wasserschäden entstehen können. Auch ist die Verbindung zwischen Rohranschlussmuffe und Ablaufrohr nach einer Montage der Ablaufvorrichtung nur noch schwer zugänglich, so dass hohe Instandsetzungskosten zu erwarten sind.

Demnach liegt der Erfindung die Aufgabe zugrunde eine Ablaufvorrichtung bereitzustellen, die eine sichere Verbindung zwischen Rohranschlussmuffe und Ablaufrohr ermöglicht.

Erfindungsgemäß wird diese Aufgabe durch eine Ablaufvorrichtung mit den kennzeichnenden Merkmalen des Anspruchs 1 gelöst. Dadurch, dass mindestens ein Rastmittel vorgesehen ist, welches dazu geeignet ist, die Überwurfmutter in einer vorbestimmten Drehposition zu fixieren, kann sichergestellt werden, dass sich die Überwurfmutter trotz Vibrationen nicht lösen kann. Als vorbestimmte Drehposition kann beispielsweise eine Drehposition vorgesehen sein, in der die Überwurfmutter eine kraftschlüssige Verbindung mit der Anschlussbuchse eingeht. Durch das Rastmittel wird eine zweite vibrationsunempfindliche Verbindung bereitgestellt, die wiederum verhindert, dass sich die Überwurfmutter aus der vorbestimmten Drehposition, ggf. abgesehen von einem vertretbaren Spiel, herausdrehen kann.

Als vorteilhafte Ausgestaltung des Rastmittels kann vorgesehen sein, dass es mindestens Sperrfläche umfasst, wobei die Sperrfläche dazu geeignet ist in der vorbestimmten Drehposition mit einer Raste in Kontakt zu treten, wobei der Kontakt zwischen Sperrfläche und Raste dazu geeignet ist die Überwurfmutter in der vorbestimmten Drehposition zu fixieren. Eine derartige Verbindung ist unempfindlich gegenüber möglichen Vibrationen und daher besonders geeignet, eine sichere Verbindung zwischen der Rohranschlussmuffe und dem Ablaufrohr herzustellen. Die Rastverbindung kann jedoch unter Zuhilfenahme eines geeigneten Werkzeuges wieder gelöst werden.

Auch kann vorteilhafterweise vorgesehen sein, dass die Sperrfläche an einer Rampe mit mindestens einer rampenförmigen Anlauffläche ausgebildet ist. Hierdurch kann sichergestellt werden, dass eine Drehrichtung der Überwurfmutter, insbesondere die Drehrichtung die zu einer Befestigung des Anschlussrohres führt, nicht von der Raste unterbunden wird.

In einer weiteren vorteilhaften Ausführungsform der vorliegenden Erfindung kann vorgesehen sein, dass die Raste mindestens eine angeschrägte Kante aufweist. Hierdurch kann ein Rastmittel bereitgestellt werden, das sich nicht ausschließlich durch ein zusätzliches Werkzeug sondern ggf. durch einen höheren Kraftaufwand wieder lösen lässt.

Vorteilhafterweise kann eine Mehrzahl von Rampen vorgesehen sein, die entlang des Umfangs der Überwurfmutter angeordnet sind. Hierdurch kann eine wesentlich feinere Abstimmung der vorbestimmten Drehposition vorgenommen werden, indem eine Vielzahl von geeigneten Rastpositionen bereitgestellt wird.

Eine vorteilhafte Verbindung zwischen der Rohranschlussmuffe und dem Ablaufrohr kann dadurch bereitgestellt werden, dass das Ablaufrohr zumindest abschnittsweise in die Rohranschlussmuffe einschiebbar ist, wobei umfangsseitig des Ablaufrohres ein umlaufender Ring vorgesehen ist, der von der Überwurfmutter hintergriffen werden kann.

Zur geeigneten Verbindung zwischen der Rohranschlussmuffe und dem Ablaufrohr kann vorgesehen sein, dass das Ablaufrohr umfangsseitig mit mindestens einer Dichtung versehen ist.

Zur Gewährleitung eines vorteilhaften Herstellungsprozesses kann weiterhin vorgesehen sein, dass die Ablaufvorrichtung weiterhin mindestens einen Ablauftopf und einen Deckelflansch umfasst, die einstückig mit der Rohranschlussmuffe ausgestaltet sind.

Auch kann vorteilhafterweise vorgesehen sein, dass Gewindestifte im Bereich des Deckelflansches vorgesehen sind. Hierdurch können weitere Ablaufelemente, beispielsweise Ablaufroste etc., auf einfache Art und Weise mit der Ablaufvorrichtung verbunden werden.

Als vorteilhaftes Material, da korrosions- und witterungsbeständig, bietet sich Kunststoff für die Herstellung der Ablaufvorrichtung an.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine seitliche Ansicht auf eine erfindungsgemäße Ablaufvorrichtung;
- Fig. 2: eine geschnittene Ansicht einer erfindungsgemäßen Ablaufvorrichtung;

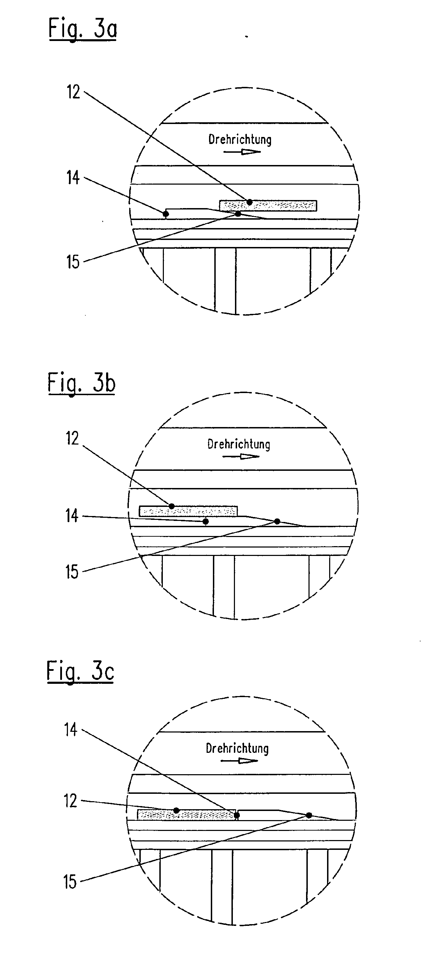

- Fig. 3a: eine Ausschnittvergrößerung des Rastmittels in einer ersten Drehposition;
- Fig. 3b: eine Ausschnittvergrößerung des Rastmittels in einer zweiten Drehposition;
- Fig. 3c: eine Ausschnittvergrößerung des Rastmittels in einer dritten Drehposition.

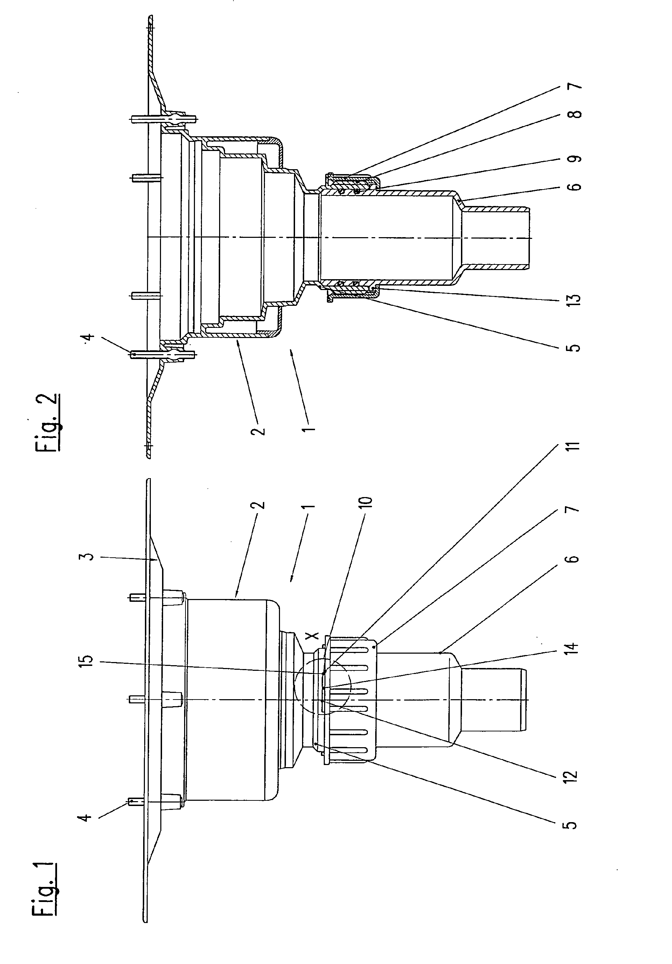

Zunächst wird auf Fig. 1 Bezug genommen.

Eine erfindungsgemäße Ablaufvorrichtung 1 umfasst im Wesentlichen einen Ablauftopf 2, der kopfseitig mit einem Deckelflansch 3 und bodenseitig mit einer Rohranschlussmuffe 5 zum Anschluss eines Ablaufrohres 6 ausgestattet ist. Die Ablaufvorrichtung 1 ist insgesamt rotationssymmetrisch ausgestaltet.

Der Deckelflansch 3 ist im Wesentlichen kreisflächig ausgeformt und in seinem Randbereich mit Gewindestiften 4 versehen, die zusammen mit entsprechenden Muttern zur Befestigung weiterer Ablaufelemente (nicht dargestellt) geeignet sind. Der Deckelflansch 3 kann beispielsweise mit der Bodenoberfläche verschraubt oder mit ihr vergossen werden.

Zum Anschluss des Ablaufrohres 6 korrespondiert der Innendurchmesser der Rohranschlussmuffe 5 zumindest für den Anschlussbereich mit dem Außendurchmesser des Ablaufrohres 6, so dass das Ablaufrohr 6 in die Rohranschlussmuffe 5 eingesteckt werden kann. Zur besseren Abdichtung sind Ringdichtungen 9 vorgesehen, die an der Innenfläche der Rohranschlussmuffe 5 anliegen können.

Zur Befestigung des Ablaufrohres 6 an der Rohranschlussmuffe 5 und damit an dem Ablauftopf 6 ist eine Überwurfmutter 7 vorgesehen, die auf ein Außengewinde 8 der Rohranschlussmuffe 5 geschraubt werden kann und dabei einen umlaufenden Ring 13 des Ablaufrohres 6 hintergreifen kann. Durch Drehung der Überwurfmutter kann das Ablaufrohr 6 an die Rohranschlussmuffe 6 gedrückt werden, bis der Ring 13 kraftschlüssig mit der Rohranschlussmuffe 6 verbunden ist. Für die Kombination aus Überwurfmutter 7 und Gewinde 8 kommt grundsätzlich jede Anordnung in Frage, die dazu geeignet ist, eine Rotationsbewegung in eine translatorische Bewegung umzuwandeln, beispielsweise auch ein Bajonettverschluss.

Erfindungsgemäß ist nunmehr vorgesehen, die Überwurfmutter 7 in einer zur Befestigung des Ablaufrohres 6 geeigneten Drehposition zu fixieren. Zu diesem Zweck ist die Überwurfmutter 7 und die Rohranschlussmuffe 5 mit einem Rastmittel 10 ausgestattet. Das Rastmittel 10 umfasst vorteilhafterweise eine Anzahl von Rampen 12, die kopfseitig der Überwurfmutter 7 vorgesehen sind. Die Rampe 12 weist eine rampenförmige Anlauffläche 15 und eine senkrecht zur Drehrichtung ausgerichtete Sperrfläche 14 auf. Auf Seiten der Rohranschlussmuffe 6 ist nunmehr eine Raste 11 in geeigneter Lage vorgesehen. Erreicht die Überwurfmutter 7 eine zur Befestigung des Anschlussrohres 5 geeignete Drehposition, ist die Sperrfläche 14 der Rampe 12 auf Höhe der Raste 11, so dass ein Zurückdrehen der Überwurfmutter 7 und damit ein Lösen der Verbindung zwischen Ablaufrohr 6 und Rohranschlussmuffe 5 nicht mehr möglich ist.

Allenfalls kann Spezialwerkzeug verwendet werden, die Raste 11 über die Sperrfläche 14 der Rampe 12 zu heben, so dass der Abstand zwischen Raste 11 und Rampe 12 wieder groß genug ist, und die Sperrfläche das Weiterdrehen der Überwurfmutter 7 nicht weiter verhindert. Alternativ kann vorgesehen sein, dass die Raste 11 ebenfalls angeschrägt ist, so dass lediglich ein erhöhter Kraftaufwand benötigt wird, falls die Überwurfmutter 7 aus der Befestigungsposition zurückgedreht werden soll.

Insgesamt kann durch das Rastmittel 10 eine sichere Verbindung zwischen dem Ablaufrohr 6 und der Rohranschlussmuffe 5 sichergestellt werden, die auch durch Vibrationen, die beispielsweise bei einer Begehung der Ablaufvorrichtung 1 auftreten, nicht gelöst werden kann.

Vorteilhafterweise kann der Deckelflansch 3, der Ablauftopf 2 und die Rohranschlussmuffe 5 einstückig und aus einem Kunststoff hergestellt sein.

## Patentansprüche

1. Ablaufvorrichtung (1) zur Boden- oder Wandmontage, umfassend mindestens eine Rohranschlussmuffe (5) zur Verbindung mit einem Ablaufrohr (6), wobei eine Überwurfmutter (7) vorgesehen ist, die auf ein Gewinde (8) der Rohranschlussmuffe (5) zur Befestigung des Ablaufrohres (6) aufgeschraubt werden kann,
**dadurch gekennzeichnet, dass**
ein Rastmittel (10) vorgesehen ist, welches dazu geeignet ist, die Überwurfmutter (7) in einer vorbestimmten Drehposition zu fixieren.

2. Ablaufvorrichtung nach Anspruch 1, **dadurch gekennzeichnet, dass** das Rastmittel (10) mindestens eine Sperrfläche (14) umfasst, wobei die Sperrfläche (14) dazu geeignet ist in der vorbestimmten Drehposition mit einer Raste (11) in Kontakt zu treten, wobei der Kontakt zwischen Sperrfläche (14) und Raste (11) dazu geeignet ist die Überwurfmutter (7) in der vorbestimmten Drehposition zu fixieren.

3. Ablaufvorrichtung nach Anspruch 2, **dadurch gekennzeichnet, dass** die Sperrfläche (14) an einer Rampe (12) mit mindestens einer rampenförmigen Anlauffläche (15) ausgebildet ist.

4. Ablaufvorrichtung nach Anspruch 2 oder 3, **dadurch gekennzeichnet, dass** die Raste (11) mindestens eine angeschrägte Kante aufweist.

5. Ablaufvorrichtung nach einem der Ansprüche 2 bis 4, **dadurch gekennzeichnet, dass** eine Mehrzahl von Rampen (12) vorgesehen sind, die entlang des Umfangs der Überwurfmutter (7) angeordnet sind.

6. Ablaufvorrichtung nach einem der Ansprüche 1 bis 5, **dadurch gekennzeichnet, dass** das Ablaufrohr (6) zumindest abschnittsweise in die Rohranschlussmuffe (5) einschiebbar ist, wobei umfangsseitig des Ablaufrohres (6) ein umlaufender Ring (13) vorgesehen ist, der von der Überwurfmutter (7) hintergriffen werden kann.

7. Ablaufvorrichtung nach einem der Ansprüche 1 bis 6, **dadurch gekennzeichnet, dass** das Ablaufrohr (6) umfangsseitig mit mindestens einer Dichtung (9) versehen ist.

8. Ablaufvorrichtung nach einem der Ansprüche 2 bis 7, **dadurch gekennzeichnet, dass** die Ablaufvorrichtung weiterhin mindestens einen Ablauftopf (2) und einen Deckelflansch (3) umfasst, die einstückig mit der Rohranschlussmuffe (5) ausgestaltet sind.

9. Ablaufvorrichtung nach Anspruch 8, **dadurch gekennzeichnet, dass** Gewindestifte (4) im Bereich des Deckelflansches (3) vorgesehen sind.

10. Ablaufvorrichtung nach einem der Ansprüche 1 bis 9, **dadurch gekennzeichnet, dass** die Ablaufvorrichtung (1) vornehmlich aus Kunststoff besteht.
